# EUROPEAN PATENT SPECIFICATION

(11) **EP 1 344 621 B1**
(45) Date of publication and mention of the grant of the patent: **26.01.2005**
(21) Application number: 02009234.2
(22) Date of filing: 25.04.2002
(51) Int. Cl.: B29C 41/14, B29C 33/30, A61J 17/00, B29C 39/10, B29C 69/02

(54) **A process for coalescing elastomeric article with a substantially square-shaped elastomeric bead and the end product produced from the process**
Verfahren zur Erzeugung eines viereckigen Wulstrandes an einen elastomerischen Gegenstand durch Koaleszenz sowie hergestelltes Endprodukt
Procédé pour fabriquer un bourrelet carré par coalescence sur un article en élastomère et produit final ainsi obtenu

(30) Priority: 12.03.2002 MY 0200874
(43) Date of publication of application: 17.09.2003
(73) Proprietor: Maidamax (M) Sdn Bhd, 08000 Sungai Petani, Kedah Darulaman (MY); Sawatani Gomu Techno Co. Ltd., Miyakojima-ku, Osaka (JP)
(72) Inventor: Ngee, Tan Keng, 08000 Sungai Petani, Kedah Darulaman (MY); Sawatani, Isao, Miyakojima-Ku, Osaka (JP)
(74) Representative: Hagemann, Heinrich, Dr.rer.nat., Dipl.-Chem.

(56) References cited:
- WO-A-94/13251
- DE-A- 2 219 908
- GB-A- 1 052 546
- US-A- 4 676 386
- US-A- 5 851 683

## Description

### FIELD OF THE INVENTION

The present invention relates to process for coalescing elastomeric article with a substantially square-shaped elastomeric bead and to an end product obtained by coalescing elastomeric article with a substantially square-shaped elastomeric bead produced from the process.

### BACKGROUND OF THE INVENTION

Pacifiers, occasionally called soothers or conforters, are well known see e.g. WO-A-94/13251. Pacifiers generally include a pliable nipple or teat which extends from one side of a guard or shield. The guard is usually made from relatively hard plastic, compared to the nipple, and is contoured to comfortably fit against the area adjacent a baby's mouth. The diameter of the guard is of sufficient magnitude to prevent it from wholly entering the child's mouth. Oftentimes a ring or handle extends from the side of the guard opposite from the nipple.

Pacifiers are used for a variety of purposes. As suggested by the name, pacifiers soothe or "pacify" an infant by providing an oral stimulation or distraction. They also aid in the infant's digestive and waste elimination processes, by stimulating salivation and peristalsis of the bowel. It has also been reported that babies provided with pacifiers are subjected to less stress, as measured by heart rate and breathing during painful medical procedures, e.g., blood sample drawing. Infants who suck a pacifier during blood drawing also seem to cry less. Also, it seems that babies who use pacifiers during gavage feeding gain more weight more quickly than babies without pacifiers. As a result, premature infants who use pacifiers spend less time in the intensive-care units and have lower hospital costs. Finally, appropriate use of a pacifier exercises the sucking muscles which are needed for bottle and breast feeding.

Conventional method of beading process in manufacturing nipples includes the steps of manufacturing the nipples and assembling them with plastic parts to form complete sets of pacifiers for babies. The manufacturing methods employed by almost all major pacifier manufacturers around the world are dipping method for natural rubber products, compression moulding method for natural rubber, silicone rubber products, etc and liquid injection moulding method for silicone rubber products.

However, the setback noted by the inventors is that the bead portion of the currently available pacifiers contains weak point at certain points of the bead portion which enables the pacifiers to be dislodged from the bead holder or even to be cut off. This is dangerous, since the babies might swallow them and might cause serious health problems, even death to the babies. So far, there is no attempt made, at least to the knowledge of the inventors and to the applicant, to overcome or at least to reduce the problem.

### SUMMARY OF THE INVENTION

The present invention is intended to solve the above-mentioned problem and its object is to provide a process of coalescing elastomeric article with an elastomeric bead and end product which is not limited to pacifier, but to male and female condom as well as tubing which are constructed suitably to overcome or at least reduce the problem hereinbefore described.

Accordingly, the present invention relates to a process for coalescing elastomeric article with a substantially square-shaped elastomeric bead, the said process comprising the steps of dipping a moulding structure having a moveable base suitably into a fluidic elastomeric material, coagulating and drying the material, positioning the moulding structure suitably to enable further fluidic elastomeric material to be supplied into the moveable base upon completion of the coagulation and the drying steps, coagulating and drying the material to enable the article to be coalesced with the elastomeric bead, discharging the base upon completion of the latter coagulating and drying steps, and drying, stripping, leaching and curring the article coalesced with the elastomeric bead.

The present invention also provides an end product produced by coalescing elastomeric article with a substantially square-shaped elastomeric bead produced from a process comprising the steps of dipping a moulding structure having a moveable base suitably into a fluidic elastomeric material, coagulating and drying the material, positioning the moulding structure suitably to enable further fluidic elastomeric material to be supplied into the moveable base upon completion of the coagulation and the drying steps, coagulating and drying the material to enable the article to be coalesced with the elastomeric bead, discharging the base upon completion of the latter coagulating and drying steps, and drying, stripping, leaching and curring the article coalesced with the elastomeric bead.

The present invention consists of certain novel features and a combination of parts hereinafter fully described and illustrated in the accompanying drawings, and particularly pointed out in the appended claims, it being understood that various changes in the details may be without departing from the scope of the invention, or sacrificing any of the advantage of the present invention.

### BRIEF DESCRIPTION OF THE DRAWINGS

It will be convenient to further describe the invention by reference to the accompanying drawings which illustrate the preferred embodiment of the retaining system of the invention. Other embodiments of the retaining system are also envisaged and consequently the particularity of the accompanying drawings is not to be understood as superseding the generality of the preceding description of the invention.
FIG. 1 shows the conventional method of dipping method for producing nipples;
FIG. 2 shows a process for coalescing elastomeric article with a substantially square-shaped elastomeric bead and the nipple produced from the process according the preferred embodiment of the invention;

### DETAILED DESCRIPTION OF THE PREFERRED EMBODIMENTS

Hereinafter, this specification will describe to a process for coalescing elastomeric article with a substantially square-shaped elastomeric bead and the end product produced from the said process of the present invention according to the preferred embodiments thereof in relation to pacifier.

However, it is to be understood that limiting the description to the preferred embodiment of the invention is merely to facilitate discussion of the present invention and it is envisioned that those skilled in the art may devise various modifications and equivalents without departing from the scope of the appended claims. It also to be noted that the process and the end product obtained from the process can be utilised for manufacturing preferably male and female condom as well as tubing.

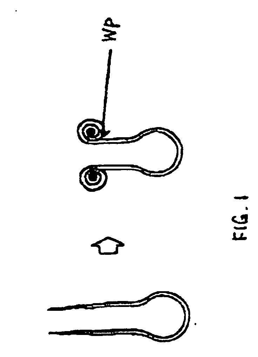

FIG. 1 shows the conventional method of dipping method for manufacturing nipples. As shown in this drawing, in this dipping method, the moulding structure is dipped into elastomeric fluid such as latex. The extended nipples' area will be rolled up to form the bead. The beading process may be performed manually by using brush or roller or by using any specific machinery.

However, the rolled-up bead contains weak points at certain point in the bead, notably at the point referred as WP in this drawing.

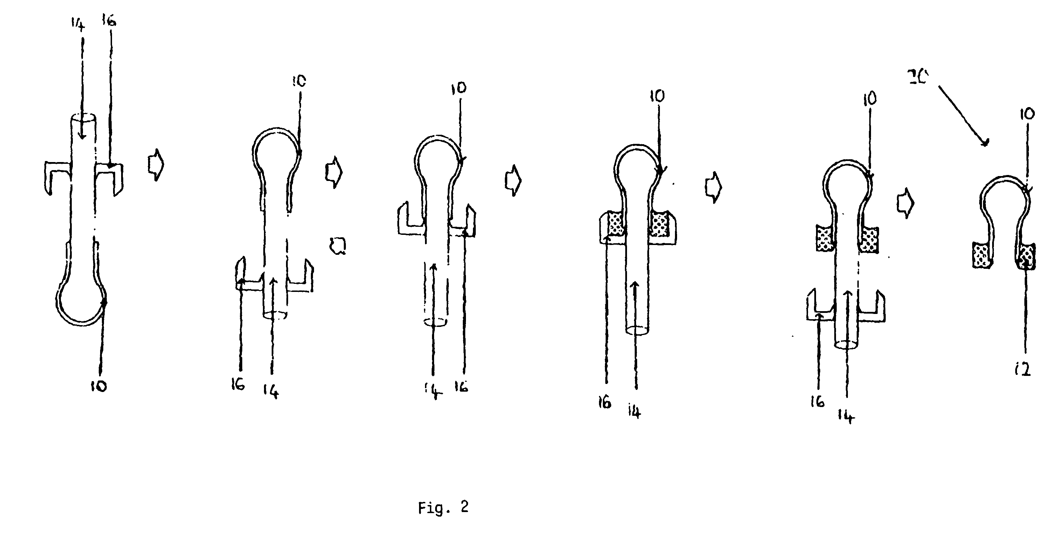

FIG. 2 shows a process for coalescing elastomeric article (10) with a substantially square-shaped elastomeric bead (12) and the nipple (20) produced from the process according to the preferred embodiment of the invention. According to this drawing, the steps are as follow:
a) dipping a moulding structure (14) having a moveable base (16) suitably into a fluidic elastomeric material;
b) coagulating and drying the material;
c) positioning the moulding structure (14) suitably to enable further fluidic elastomeric material to be supplied into the base (16) upon completion of step (b);
d) coagulating and drying the material to enable the article (10) to be coalesced with the bead (12);
e) discharging the base (16) upon completion of step (d); and
f) drying, stripping, leaching and curring the article (10) coalesced with the bead.

In step (a), the moulding structure (14) is dipped into any elastomeric fluid such as latex, silicone rubber etc. Note that the base (16) is located away from the article (10). However, this is optional, as the base (16) can be located near to the article (10). The structure (14) is then overturned and then the fluid is then coagulated and dried. Alternatively, the coagulation and drying steps can be performed earlier followed by the overturning step.

The base (16) is then set to a suitably location to enable further fluid to be supplied into the base (16). As mentioned earlier, the base (16) can be located near the article (10). The setting of the base (16) is deemed necessary only if the base (16) is located away from the article (10).

Then the fluid is supplied to the base (16). Subsequently, the fluid will be coagulated and dried. At this point, the article (10) may already be appended to the bead (12) forming a complete set of a pacifier (20). Upon completion of the drying step, the base (16) is then removed.

The nipple (20) is then dried. Upon completion, the pacifier (20) is stripped, leached and curred.

The above described process is conducted in a prescribed temperature ranges from 10°C to 40°C, preferably at 25°C and at a prescribed pressure, preferably at 1 atm.

The total solid content (TSC) of the fluidic elastomeric material used in the present invention is 30% to 100%. Heat sensitising agents are added to the fluidic elastomeric material if the TSC of the fluidic elastomeric material are low. For artisan in this field, TSC of the fluidic elastomeric material is considered to be low if the TSC less than 70%.

In the preferred embodiment of the invention, the heat sensitising agents are selected from polyvinylmethylether (PVME).

It is noted by the inventors that the bead (12) having slip resistance of more than 200N, which is higher than the resistance requirement set out under Code of Statutes Of National Swedish Board for Consumer Policies KOVfs 1979 : 10 which is known to be the most stringent in the world.

Further, even though not shown in FIG. 1, the bead (12) can be provided with a bead holder. The inventors noted that diameter of the bead (12) for the pacifier obtained from the hereinbefore-described process is smaller than the diameter of conventional pacifiers, which enables the bead holder to be compact.

While in the foregoing specification this invention has been described in relation to certain preferred embodiments thereof, and many details have been set forth for purpose of illustration, it will be apparent to those skilled in the art that the invention is susceptible to additional embodiments and that certain of the details described herein can be varied considerably without departing from the basic principles of the invention.

## Claims

1. A process for coalescing elastomeric article (10) with a substantially square-shaped elastomeric bead (12), the said process comprising the steps of:
a) dipping a moulding structure (14) having a moveable base (16) suitably into a fluidic elastomeric material;
b) coagulating and drying the material;
c) positioning the moulding structure (14) suitably to enable further fluidic elastomeric material to be supplied into the base (16) upon completion of step (b);
d) coagulating and drying the material to enable the article (10) to be coalesced with the bead (12);
e) discharging the base (16) upon completion of step (d); and
f) drying, stripping, leaching and curring the article (10) coalesced with the bead (12).

2. A process as claimed in claim 1, wherein the base (16) may be positioned away from the material in steps (a) and (b).

3. A process as claimed in claim 1, wherein the process is conducted in a prescribed temperature ranges from 10°C to 40°C, preferably at 25°C.

4. A process as claimed in claim 1, wherein the process is conducted in a prescribed pressure, preferably at 1 atm.

5. A process as claimed in claim 1, wherein total solid content (TSC) of the fluidic elastomeric material is 30% to 100%.

6. A process as claimed in claim 5, wherein heat sensitising agents are added to the fluidic elastomeric material if the total solid contents (TSC) of the fluidic elastomeric material are low.

7. A process as claimed in claim 6, wherein the total solid contents (TSC) of the fluidic elastomeric material is less than 70%.

8. A process as claimed in claim 6, wherein the heat sensitising agents are selected from polyvinylmethylether (PVME).

9. A process as claimed in any of claims 1 to 8, wherein the bead (12) having slip resistance of more than 200N.

10. A process as claimed in claim 9, wherein the bead (12) having a bead holder.

11. A process as claimed in claim 10, wherein diameter of the bead (12) is small which enables the bead holder to be compact.

12. A process as claimed in any one of the preceding claims, wherein the end product (20) is selected from pacifier, male condom, female condom or tubing.

13. An end product (20) obtained by coalescing elastomeric article (10) with a substantially square-shaped elastomeric bead (12) produced from a process comprising the steps of:
a) dipping a moulding structure (14) having a moveable base (16) suitably into a fluidic elastomeric material;
b) coagulating and drying the material;
c) positioning the moulding structure (16) suitably to enable further fluidic elastomeric material to be supplied into the base (16) upon completion of step (b);
d) coagulating and drying the material to enable the article (10) to be coalesced with the bead (12);
e) discharging the base (16) upon completion of step (d); and
f) drying, stripping, leaching and curring the article (10) coalesced with the bead (12).

14. An end product (20) obtained by coalescing elastomeric article (10) with a substantially square-shaped elastomeric bead (12) as claimed in claim 13, wherein the base (16) may be positioned away from the material in steps (a) and (b).

15. An end product (20) obtained by coalescing elastomeric article (10) with a substantially square-shaped elastomeric bead (12) as claimed in claim 13, wherein the process is conducted in a prescribed temperature ranges from 10°C to 40°C, preferably at 25°C.

16. An end product (20) obtained by coalescing elastomeric article (10) with a substantially square-shaped elastomeric bead (12) as claimed in claim 13, wherein the process is conducted in a prescribed pressure, preferably at 1 atm.

17. An end product (20) obtained by coalescing elastomeric article (10) with a substantially square-shaped elastomeric bead (12) as claimed in claim 13, wherein total solid content (TSC) of the fluidic elastomeric material is 30% to 100%.

18. An end product (20) obtained by coalescing elastomeric article (10) with a substantially square-shaped elastomeric bead (12) as claimed in claim 17, wherein heat sensitising agents are added to the fluidic elastomeric material if the total solid contents (TSC) of the fluidic elastomeric material are low.

19. An end product (20) obtained by coalescing elastomeric article (10) with a substantially square-shaped elastomeric bead (12) as claimed in claim 18, wherein the total solid contents (TSC) of the fluidic elastomeric material is less than 70%.

20. An end product (20) obtained by coalescing elastomeric article (10) with a substantially square-shaped elastomeric bead (12) as claimed in claim 17, wherein the heat sensitising agents are selected from polyvinylmethylether (PVME).

21. An end product (20) obtained by coalescing elastomeric article (10) with a substantially square-shaped elastomeric bead (12) as claimed in any of claims 13 to 20, wherein the bead (12) having slip resistance of more than 200N.

22. An end product (20) obtained by coalescing elastomeric article (10) with a substantially square-shaped elastomeric bead (12) as claimed in claim 21, wherein the bead (12) having a bead holder.

23. An end product (20) obtained by coalescing elastomeric article (10) with a substantially square-shaped elastomeric bead (12) as claimed in claim 21, wherein diameter of the bead (12) is small which enables the bead holder to be compact.

24. An end product (20) obtained by coalescing elastomeric article (10) with a substantially square-shaped elastomeric bead (12) as claimed in any one of the preceding claims, wherein the end product (20) is selected from pacifier, male condom, female condom or tubing.

## Patentansprüche

1. Prozess für die Herbeiführung einer Koaleszenz zwischen einem elastomeren Gegenstand (10) und einem im Wesentlichen quadratischen elastomeren Wulst (12), wobei der Prozess die folgenden Schritte umfasst
a) geeignetes Eintauchen einer Formungsstruktur (14), die eine bewegliche Basis (16) besitzt, in einen fluidförmigen elastomeren Werkstoff;
b) Koagulieren und Trocknen des Werkstoffs;
c) geeignetes Positionieren der Formungsstruktur (14), damit nach Abschluss des Schrittes (b) der Basis (16) weiterer elastomerer Werkstoff zugeführt werden kann,
d) Koagulieren und Trocknen des Materials, damit eine Koaleszenz zwischen dem Gegenstand (10) und dem Wulst (12) herbeigeführt werden kann;
e) Entleeren der Basis (16) nach Abschluss des Schrittes (d); und
f) Trocknen, Abstreifen, Auslaugen und Zurichten des Gegenstandes (10), für den eine Koaleszenz mit dem Wulst (12) herbeigeführt worden ist.

2. Prozess nach Anspruch 1, bei dem die Basis (16) in den Schritten (a) und (b) in einem Abstand von dem Werkstoff angeordnet sein kann.

3. Prozess nach Anspruch 1, wobei der Prozess in einem vorgeschriebenen Temperaturbereich von 10 °C bis 40 °C, vorzugsweise bei 25 °C, ausgeführt wird.

4. Prozess nach Anspruch 1, wobei der Prozess unter einem vorgeschriebenen Druck, vorzugsweise bei 1 atm, ausgeführt wird.

5. Prozess nach Anspruch 1, bei dem der gesamte Festkörpergehalt (TSC) des fluidförmigen elastomeren Werkstoffs im Bereich von 30 % bis 100 % liegt.

6. Prozess nach Anspruch 5, bei dem zu dem fluidförmigen elastomeren Werkstoff wärmeempfindliche Agenzien hinzugefügt werden, wenn die gesamten Festkörpergehalte (TSC) des fluidförmigen elastomeren Werkstoffs gering sind.

7. Prozess nach Anspruch 6, bei dem die gesamten Festkörpergehalte (TSC) des fluidförmigen elastomeren Werkstoffs weniger als 70 % betragen.

8. Prozess nach Anspruch 6, bei dem die wärmeempfindlichen Agenzien aus Polyvinylmethylether (PVME) ausgewählt sind.

9. Prozess nach einem der Ansprüche 1 bis 8, bei dem der Wulst (12) einen Gleitwiderstand von mehr als 200 N besitzt.

10. Prozess nach Anspruch 9, bei dem der Wulst (12) einen Wulsthalter besitzt.

11. Prozess nach Anspruch 10, bei dem der Durchmesser des Wulstes (12) klein ist, so dass der Wulsthalter kompakt sein kann.

12. Prozess nach einem der vorhergehenden Ansprüche, bei dem das Endprodukt (20) aus einem Schnuller, einem Männerkondom, einem Frauenkondom oder einem Schlauch ausgewählt ist.

13. Endprodukt (20), das durch Herbeiführen einer Koaleszenz zwischen einem elastomeren Gegenstand (10) und einem im Wesentlichen quadratischen elastomeren Wulst (12) erhalten wird und durch einen Prozess erzeugt wird, der die folgenden Schritte umfasst:
a) geeignetes Eintauchen einer Formungsstruktur (14), die eine bewegliche Basis (16) besitzt, in einen fluidförmigen elastomeren Werkstoff;
b) Koagulieren und Trocknen des Werkstoffs;
c) geeignetes Positionieren der Formungsstruktur (14), damit nach Abschluss des Schrittes (b) der Basis (16) weiterer elastomerer Werkstoff zugeführt werden kann,
d) Koagulieren und Trocknen des Materials, damit eine Koaleszenz zwischen dem Gegenstand (10) und dem Wulst (12) herbeigeführt werden kann;
e) Entleeren der Basis (16) nach Abschluss des Schrittes (d); und
f) Trocknen, Abstreifen, Auslaugen und Zurichten des Gegenstandes (10), für den eine Koaleszenz mit dem Wulst (12) herbeigeführt worden ist.

14. Endprodukt (20), das durch Herbeiführen einer Koaleszenz zwischen einem elastomeren Gegenstand (10) und einem im Wesentlichen quadratischen elastomeren Wulst (12) erhalten wird, nach Anspruch 13, bei dem die Basis (16) in den Schritten (a) und (b) in einem Abstand von dem Werkstoff angeordnet sein kann.

15. Endprodukt (20), das durch Herbeiführen einer Koaleszenz zwischen einem elastomeren Gegenstand (10) und einem im Wesentlichen quadratischen elastomeren Wulst (12) erhalten wird, nach Anspruch 13, bei dem der Prozess in einem vorgeschriebenen Temperaturbereich von 10 °C bis 40 °C, vorzugsweise bei 25 °C, ausgeführt wird.

16. Endprodukt (20), das durch Herbeiführen einer Koaleszenz zwischen einem elastomeren Gegenstand (10) und einem im Wesentlichen quadratischen elastomeren Wulst (12) erhalten wird, nach Anspruch 13, bei dem der Prozess unter einem vorgeschriebenen Druck, vorzugsweise bei 1 atm, ausgeführt wird.

17. Endprodukt (20), das durch Herbeiführen einer Koaleszenz zwischen einem elastomeren Gegenstand (10) und einem im Wesentlichen quadratischen elastomeren Wulst (12) erhalten wird, nach Anspruch 13, bei dem der gesamte Festkörpergehalt (TSC) des fluidförmigen elastomeren Werkstoffs im Bereich von 30 % bis 100 % liegt.

18. Endprodukt (20), das durch Herbeiführen einer Koaleszenz zwischen einem elastomeren Gegenstand (10) und einem im Wesentlichen quadratischen elastomeren Wulst (12) erhalten wird, nach Anspruch 17, bei dem zu dem fluidförmigen elastomeren Werkstoff wärmeempfindliche Agenzien hinzugefügt werden, falls der gesamte Festkörpergehalt (TSC) des fluidförmigen elastomeren Werkstoffs gering ist.

19. Endprodukt (20), das durch Herbeiführen einer Koaleszenz zwischen einem elastomeren Gegenstand (10) und einem im Wesentlichen quadratischen elastomeren Wulst (12) erhalten wird, nach Anspruch 18, bei dem der gesamte Festkörpergehalt (TSC) des fluidförmigen elastomeren Werkstoffs weniger als 70 % beträgt.

20. Endprodukt (20), das durch Herbeiführen einer Koaleszenz zwischen einem elastomeren Gegenstand (10) und einem im Wesentlichen quadratischen elastomeren Wulst (12) erhalten wird, nach Anspruch 17, bei dem die wärmeempfindlichen Agenzien aus Polyvinylmethylether (PVME) ausgewählt sind.

21. Endprodukt (20), das durch Herbeiführen einer Koaleszenz zwischen einem elastomeren Gegenstand (10) und einem im Wesentlichen quadratischen elastomeren Wulst (12) erhalten wird, nach einem der Ansprüche 13 bis 20, bei dem der Wulst (12) einen Gleitwiderstand von mehr als 200 N hat.

22. Endprodukt (20), das durch Herbeiführen einer Koaleszenz zwischen einem elastomeren Gegenstand (10) und einem im Wesentlichen quadratischen elastomeren Wulst (12) erhalten wird, nach Anspruch 21, bei dem der Wulst (12) einen Wulsthalter besitzt.

23. Endprodukt (20), das durch Herbeiführen einer Koaleszenz zwischen einem elastomeren Gegenstand (10) und einem im Wesentlichen quadratischen elastomeren Wulst (12) erhalten wird, nach Anspruch 21, bei dem der Durchmesser des Wulstes (12) klein ist, was ermöglicht, dass der Wulsthalter kompakt sein kann.

24. Endprodukt (20), das durch Herbeiführen einer Koaleszenz zwischen einem elastomeren Gegenstand (10) und einem im Wesentlichen quadratischen elastomeren Wulst (12) erhalten wird, nach einem der vorhergehenden Ansprüche, wobei das Endprodukt (20) ausgewählt ist aus einem Schnuller, einem Männerkondom, einem Frauenkondom oder einem Schlauch.

## Revendications

1. Procédé pour unir un article élastomère (10) avec un bourrelet élastomère de forme pratiquement carrée (12), ledit procédé comprenant les étapes consistant :
a) à plonger une structure de moulage (14) ayant une base mobile (16) convenablement dans une matière élastomère fluide ;
b) à faire coaguler et sécher la matière ;
c) à positionner la structure de moulage (14) convenablement pour pouvoir fournir une quantité supplémentaire de matière élastomère fluide dans la base (16) lors de l'achèvement de l'étape (b) ;
d) à faire coaguler et sécher la matière pour permettre d'unir l'article (10) avec le bourrelet (12) ;
e) à décharger la base (16) lors de l'achèvement de l'étape (d) ; et
f) à soumettre à un séchage, un entraînement, un lessivage et un durcissement l'article (10) uni avec le bourrelet (12).

2. Procédé suivant la revendication 1, dans lequel la base 16 peut être positionnée à distance de la matière dans les étapes a) et b).

3. Procédé suivant la revendication 1, ledit procédé étant mis en oeuvre sur une plage de températures prescrite de 10°C à 40°C, de préférence à une température de 25°C.

4. Procédé suivant la revendication 1, ledit procédé étant mis en oeuvre à une pression prescrite, de préférence égale à 1 atm.

5. Procédé suivant la revendication 1, dans lequel la teneur en matière solide totale (TST) de la matière élastomère fluide est comprise dans l'intervalle de 30 % à 100 %.

6. Procédé suivant la revendication 5, dans lequel des agents thermosensibilisants sont ajoutés à la matière élastomère fluide si la teneur en matière solide totale (TST) de la matière élastomère fluide est basse.

7. Procédé suivant la revendication 6, dans lequel la teneur en matière solide totale (TST) de la matière élastomère fluide est inférieure à 70 %.

8. Procédé suivant la revendication 6, dans lequel les agents thermosensibilisants sont choisis parmi des polyvinylméthyléthers (PVME).

9. Procédé suivant l'une quelconque des revendications 1 à 8, dans lequel le bourrelet (12) présente une résistance au glissement supérieure à 200 N.

10. Procédé suivant la revendication 9, dans lequel le bourrelet (12) possède un support de bourrelet.

11. Procédé suivant la revendication 10, dans lequel le diamètre du bourrelet (12) est faible, ce qui permet au support de bourrelet d'être compact.

12. Procédé suivant l'une quelconque des revendications précédentes, dans lequel le produit final (20) est choisi entre une sucette pour bébés, un préservatif masculin, un préservatif féminin et une tubulure.

13. Produit final (20) obtenu par l'union d'un article élastomère (10) avec un bourrelet élastomère de forme pratiquement carrée (12) produit par un procédé comprenant les étapes consistant :
a) à plonger une structure de moulage (14) ayant une base mobile (16) convenablement dans une matière élastomère fluide ;
b) à faire coaguler et sécher la matière ;
c) à positionner la structure de moulage (16) convenablement pour pouvoir fournir une quantité supplémentaire de matière élastomère fluide dans la base (16) lors de l'achèvement de l'étape (b) ;
d) à faire coaguler et sécher la matière pour permettre d'unir l'article (10) avec le bourrelet (12) ;
e) à décharger la base (16) lors de l'achèvement de l'étape (d) ; et
f) à soumettre à un séchage, un entraînement, un lessivage et un durcissement l'article (10) uni avec le bourrelet (12).

14. Produit final (20) obtenu par union d'un article élastomère (10) avec un bourrelet élastomère de forme pratiquement carrée (12) suivant la revendication 11, dans lequel la base (16) peut être positionnée à distance de la matière dans les étapes (a) et (b).

15. Produit final (20) obtenu par union d'un article élastomère (10) avec un bourrelet élastomère de forme pratiquement carrée (12) suivant la revendication 13, le procédé étant mis en oeuvre sur une plage de températures prescrite de 10°C à 40°C, de préférence à une température de 25°C.

16. Produit final (20) obtenu par union d'un article élastomère (10) avec un bourrelet élastomère de forme pratiquement carrée (12) suivant la revendication 13, ledit procédé étant mis en oeuvre à une pression prescrite, de préférence égale à 1 atm.

17. Produit final (20) obtenu par union d'un article élastomère (10) avec un bourrelet élastomère de forme pratiquement carrée (12) suivant la revendication 13, dans lequel la teneur en matière solide totale (TST) de la matière élastomère fluide est comprise dans l'intervalle de 30 % à 100 %.

18. Produit final (20) obtenu par union d'un article élastomère (10) avec un bourrelet élastomère de forme pratiquement carrée (12) suivant la revendication 17, dans lequel des agents thermosensibilisants sont ajoutés à la matière élastomère fluide si la teneur en matière solide totale (TST) de la matière élastomère fluide est basse.

19. Produit final (20) obtenu par union d'un article élastomère (10) avec un bourrelet élastomère de forme pratiquement carrée (12) suivant la revendication 18, dans lequel la teneur en matière solide totale (TST) de la matière élastomère fluide est inférieure à 70 %.

20. Produit final (20) obtenu par union d'un article élastomère (10) avec un bourrelet élastomère de forme pratiquement carrée (12) suivant la revendication 17, dans lequel les agents thermosensibilisants sont choisis parmi des polyvinylméthyléthers (PVME).

21. Produit final (20) obtenu par union d'un article élastomère (10) avec un bourrelet élastomère de forme pratiquement carrée (12) suivant l'une quelconque des revendications 13 à 20, dans lequel le bourrelet (12) possède une résistance au glissement supérieure à 200 N.

22. Produit final (20) obtenu par union d'un article élastomère (10) avec un bourrelet élastomère de forme pratiquement carrée (12) suivant la revendication 21, dans lequel le bourrelet (12) possède un support de bourrelet.

23. Produit final (20) obtenu par union d'un article élastomère (10) avec un bourrelet élastomère de forme pratiquement carrée (12) suivant la revendication 21, dans lequel le diamètre de bourrelet est petit, ce qui permet au support de bourrelet d'être compact.

24. Produit final (20) obtenu par union d'un article élastomère (10) avec un bourrelet élastomère de forme pratiquement carrée (12) suivant l'une quelconque des revendications précédentes, le produit final (20) étant choisi entre une sucette pour bébés, un préservatif masculin, un préservatif féminin et une tubulure.
